Europäisches Patentamt

European Patent Office

Office européen des brevets

(11) Veröffentlichungsnummer: **0 215 223**
**B1**

# (12) EUROPÄISCHE PATENTSCHRIFT

(45) Veröffentlichungstag der Patentschrift:
02.11.89

(21) Anmeldenummer: 86109310.2

(22) Anmeldetag: 08.07.86

(51) Int. Cl.⁴: **C09D 3/48**, C09D 3/393,
B05D 1/38
// C09D5/28

(54) Verfahren zum Lackieren bahnförmiger oder tafelförmiger Substratmaterialien.

(30) Priorität: 31.08.85 DE 3531123

(43) Veröffentlichungstag der Anmeldung:
25.03.87 Patentblatt 87/13

(45) Bekanntmachung des Hinweises auf die Patenterteilung:
02.11.89 Patentblatt 89/44

(84) Benannte Vertragsstaaten:
AT BE CH DE FR GB IT LI LU NL SE

(56) Entgegenhaltungen:
DE-A- 1 669 311
DE-A- 2 713 550
DE-A- 2 942 487

(73) Patentinhaber: Schramm Lacke GmbH,
Kettelerstrasse 100, 6050 Offenbach(DE)

(72) Erfinder: Bauchhenss, Jürgen, Limesstrasse 20,
D-6057 Eietzenbach-Steinberg(DE)

(74) Vertreter: Weber, Dieter, Dr. et al, Dr. Dieter Weber und
Dipl.-Phys. Klaus Seiffert Patentanwälte
Gustav-Freytag-Strasse 25 Postfach 6145,
D-6200 Wiesbaden 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Auf verschiedenen Anwendungsgebieten, wie beispielsweise bei der Herstellung von Gehäusen sogenannter "weißer Ware", wie von Kühlgeräten und Waschgeräten, ist es erwünscht, beim Lackieren keine glatte Oberfläche, sondern eine Oberflächenstruktur zu bekommen, da eine glatte Lackierung kleinere Unregelmäßigkeiten der Oberfläche nicht abdeckt.

Eine solche Oberflächenstruktur der Lackierung kann man bisher nur im Spritzverfahren bekommen, indem man dem Spritzlack thixotropierende Mittel oder Silicone zusetzt, die beim Einbrennen des Lackes eine erwünschte narbenartige Oberflächenstruktur ergeben.

Neuere Entwicklungen ergaben die Möglichkeit, Bleche im Walzenauftrag (Coil Coating) vor dem Formen zu lackieren, was zu einer erheblichen Rationalisierung der Herstellung beispielsweise von Gehäusen "weißer Ware" führt. Beim Lackieren durch Walzenaufrag ist es aber bislang nur möglich, glatte Oberflächen zu erhalten, da der Zusatz thixotropierender Mittel oder Silicone nicht möglich ist, da diese ein ausreichendes Verlaufen des Lackes in dem schnellen Coil Coating-Verfahren verhindern oder sich störend auf den Verfahrensablauf auswirken.

Die der Erfindung zugrundeliegende Aufgabe bestand somit darin, ein Verfahren zum Lackieren bahnförmiger oder tafelförmiger Materialien, wie Bleche, durch Walzenauftrag zu bekommen, bei dem man eine Oberflächenstruktur erhält, wie sie bislang nur durch Spritzlackieren mit Naßlack, Pulver oder Emaille erhältlich ist. Ein weiterer Aspekt der der Erfindung zugrundeliegenden Aufgabe besteht darin, im Walzenauftrag lackierte bahnförmige oder tafelförmige Materialien mit verbesserten physikalischen Eigenschaften zu bekommen. Diese Aufgabe wird durch das erfindungsgemäße Verfahren gelöst.

Dieses erfindungsgemäße Verfahren zum Lackieren bahförmiger oder tafelförmiger Substratmaterialien durch Walzenauftrag unter Aufbringung einer Grundlackschicht und einer Decklackschicht ist dadurch gekennzeichnet, daß man zur Aufbringung einer der beiden Lackschichten einen Lack verwendet, der in einem Lösungs- oder Dispergiermittel ein vernetzbares oder thermoplastisches, bei der Verarbeitungstemperatur flüssiges Harz, 0,5 bis 7 Gew.-%, bezogen auf das Trockengewicht des Harzes, einer in dem Lösungs- oder Dispergiermittel suspendierten oder emulgierten organischen Substanz, deren Teilchen- oder Tröpfchengrößen zwischen 3 und 60 µm liegen, die bei der Verarbeitungstemperatur schmilzt und deren Oberflächenspannung sich von derjenigen des Harzes unterscheidet, und gegebenenfalls übliche Lackzusatzstoffe enthält.

Bei dem erfindungsgemäßen Verfahren sind also zwei Alternativmöglichkeiten gegeben. Entweder bringt man auf dem Substratmaterial, wie Metallblech, zunächst eine die suspendierte oder emulgierte organische Substanz enthaltende Grundlackschicht auf, die infolge dieser organischen Substanz eine über die Oberfläche gleichmäßig verteilte narbenartige Oberflächenstruktur mit Erhöhungen und Vertiefungen ergibt, worauf man eine normale Decklackschicht aufbringt, die über der strukturierten Grundlackschicht einen zusammenhängenden Überzug bildet, der die Oberflächenstruktur der Grundlackschicht annimmt. Man bekommt so eine Oberflächenstruktur, wie sie beispielsweise bei sogenannter "weißer Ware" bisher mit Hilfe des umständlichen und mit relativgeringem Produktionsdurchsatz durchführbaren Spritzlackierverfahren erhältlich war.

Die andere Alternativmöglichkeit besteht darin, daß man zunächst eine glatte und zusammenhängende Grundlackschicht und sodann darüber eine die organische Substanz enthaltende Decklackschicht aufbringt, welche letztere die Oberflächen struktur ergibt. Je nachdem, wie man die Lackschichten einfärbt, bekommt man nicht nur strukturierte, sondern auch mit ungewöhnlichen Farbeffekten ausgestattete Lackierungen, die neue ästhetische Eindrücke vermitteln. So kann der Grundlack farblos oder pigmentiert oder mit Metallbronzen versetzt sein, um einen Metalliceffekt zu ergeben. Auch der Oberflächenlack kann ein Klarlack oder ein pigmentierter Lack sein. Je nach der Kombination ergeben sich dabei unterschiedliche optische Effekte.

Die erfindungsgemäß erzielbare Oberflächenstruktur ist überraschend und beruht auf der unterschiedlichen Oberflächenspannung oder Benetzbarkeit der organischen Substanz einerseits und des Lackharzes andererseits. Die genarbte Oberflächenstruktur hat darüberhinaus noch den zusätzlichen Vorteil, daß die Oberflächenabriebbeständigkeit verbessert wird. Dies ist wohl darauf zurückzuführen, daß die lackierte Oberfläche aus "Bergen" und "Tälern" besteht, wobei die "Berge" eine größere Dicke als bei üblichen Lackierverfahren haben, ohne daß die Gesamtlackmenge gegenüber solchen üblichen Verfahren erhöht ist. Beim Abrieb setzt der Angriff im wesentlichen ausschließlich an den "Bergen" an, die einem solchen Angriff erheblich länger als glatte Lackschichten, die frei von der organischen Substanz sind, widerstehen.

Im übrigen werden die physikalischen und chemischen Eigenschaften der Lackschicht durch den Zusatz der organischen Substanz überraschenderweise gegenüber normalen Lacken in keiner Weise verschlechtert, so daß die erfindungsgemäß lakkierten Materialien hervorragende Waschlaugenbeständigkeit, Kochfestigkeit, hohe mechanische Verformungseigenschaften, gute Reinigungsmittelfestigkeit, Oberflächenhärte und gute Gleiteigenschaften beim Ziehen und Verformen haben.

So läßt sich das erfindungsgemäße Lackierverfahren durch Walzenauftrag (Roller Coating oder Coil Coating) auf den verschiedensten technischen Gebieten einsetzen, wo solche Eigenschaften und eine Oberflächenstruktur der Lackschicht erwünscht sind. Zu nennen sind beispielsweise Gebiete, wie der Regalbau, die Herstellung weißer Ware (Kühlgeräte, Waschgeräte), die Herstellung von Verkleidungen und Gehäusen aller Art, wie von Büromaschinen, Phonogeräten, Haushaltsgeräten, Büromöbeln, Schaltschränken und -tafeln und dergleichen. Generell kann das erfindungsgemäße Verfahren vielfach dort eingesetzt werden, wo heute Spritzlackierverfahren üblich sind, was im Hinblick auf die hohe Produktionsgeschwindigkeit des Walzenauftragsverfahrens von großer wirtschaftlicher Bedeutung ist.

Die Grundlackschicht und Decklackschicht werden zweickmäßigerweise in Schichtdicken aufgebracht, die einer Trockenfilmdicke von 5 bis 40 μm, vorzugsweise von 5 bis 30 μm und besonders von 10 bis 20 μm entsprechen.

Insbesondere liegen bevorzugte Trockenfilmdicken im Falle der Alternativmöglichkeit mit die organische Substanz enthaltender Grundlackschicht bei 10 bis 20 μm (Höhe der "Berge") für die Grundlackschicht und bei 20 bis 25 μm für die Decklackschicht. Im Falle der Alternativmöglichkeit mit die organische Substanz enthaltender Decklackschicht liegen bevorzugte Trockenfilmdicken bei 5 bis 15 μm für die Grundlackschicht und bei 15 bis 25 μm (Höhen der "Berge") für die Decklackschicht.

Die Oberflächenstruktur wird umso grober, je höher die Trokkenfilmstärke der die organische Substanz enthaltenden Lackschicht ist und je größer der Gehalt der organischen Substanz innerhalb des oben genannten Bereiches von 0,5 bis 7 Gew.-% liegt. Umgekehrt erhält man feinere Strukturen mit abnehmenden Gehalten der organischen Substanz und geringeren Trockenfilmstärken der diese Substanz enthaltenden Lackschicht.

Wenn hier von einer in dem Lösungs- oder Dispergiermittel suspendierten oder emulgierten organischen Substanz die Rede ist, so kann man diese auch als Störsubstanz bezeichnen, da sie die Ausbildung einer glatten Lackschicht stört. Als derartige organische Substanzen können im erfindungsgemäßen Verfahren Flüssigkeiten oder bei der Verarbeitungstemperatur schmelzende Feststoffe verwendet werden. Als Flüssigkeiten kommen beispielsweise tröpfchenbildende Öle oder Fette, als Feststoffe Polymere oder insbesondere Wachse in Betracht. Im Falle flüssiger Störstoffe brauchen diese nicht von vornherein mit den angegebenen Tröpfchengrößen emulgiert in dem Lack vorzuliegen. Es genügt, wenn sie während des Erhitzens, wie beispielsweise im Verlauf der Verdampfung von Lösungsmittel aus dem Lack, sich in Form feiner Tröpfchen abscheiden.

Bevorzugt verwendet man als die organische Störsubstanz einen Feststoff, wie angegeben zweckmäßig ein Wachs.

Wichtig ist, daß der organische Störstoff und das im Lack enthaltene Harz unterschiedliche Oberflächenspannung oder Benetzbarkeit besitzen. Die Oberflächenspannung wird wie üblich als Energie E pro zu erzeugende Oberfläche A verstanden. In üblicher Weise bestimmt man die Oberflächenspannung als den Kontaktwinkel mit einer bestimmten Flüssigkeit, wie üblicherweise mit destilliertem Wasser. Ein Kontaktwinkel 0 bedeutet vollständige Benetzung, ein Kontaktwinkel von 180° keine Benetzung. Zweckmäßig unterscheiden sich die Oberflächenspannungen von Harz und organischer Störsubstanz, ausgedrückt als der Kontaktwinkel bei Benetzung mit destilliertem Wasser um mindestens 20°, vorzugsweise um mindestens 30°, besonders um mindestens 40°, beispielsweise gemessen mit einem Kontaktwinkelmeßgerät ERMA Typ G 1 der Krüss Wissenschaftliche Laborgeräte GmbH, Hamburg.

Bevorzugte Gehalte der organischen Störsubstanz in dem flüssigen Lack liegen, bezogen auf das Trockengewicht des darin enthaltenen Harzes, bei 1 bis 5 Gew.-%, besonders bei 1,5 bis 4 Gew.-%. Bei Gehalten dieser Substanz unter 0,5 Gew.-%, bezogen auf das Trockengewicht des Harzes, wird der strukturierte Oberflächeneffekt zu gering, so daß sich das Aussehen der fertigen Lackierung einer glatten Lackschicht nähert. Bei Gehalten über 7 Gew.-%, bezogen auf das Trockengewicht des Harzes, wird die Strukturierung zu grob und möglicherweise ungleichmäßig.

Die Teilchen- bzw. Tröpfchengrößen der in dem Lack suspendierten oder emulgierten organischen Störsubstanzen liegen zwischen 3 und 60 μm. Bei Festsubstanzen liegen die Teilchengrößen gewöhnlich zwischen 5 und 60 μm, vorzugsweise zwischen 10 und 40 μm, wobei es sich gewöhnlich um Gemische von Teilchen unterschiedlicher Teilchengröße handelt, deren kleinste aber 3 μm nicht unterschreiten und deren größte 60 μm nicht überschreiten.

Wenn die organische Störsubstanz bei Raumtemperatur eine Flüssigkeit ist, liegen die Tröpfchengrößen gewöhnlich zwischen 3 und 15, bevorzugt zwischen 3 und 5 μm.

Am zweckmäßigsten ist es, wenn man als organische Störsubstanz eine solche verwendet, die unterhalb der Vernetzungs- bzw. Schmelztemperatur des Harzes flüssig ist oder wird. Bei Verwendung fester organischer Substanzen zu diesem Zweck liegt deren Schmelzpunkt zweckmäßig zwischen 100 und 180, vorzugsweise zwischen 130 und 160 °C. Die Substanzen dürfen sich in dem Lacksystem teilweise lösen. Auf jeden Fall müssen sie, wie erwähnt, zumindest während des Erwärmens mit den erwünschten Teilchengrößen oder Tröpfchengrößen ausfallen und dürfen nicht bis zum Vernetzen oder Aufschmelzen des Harzes in echter Lösung in dem Lösungs- oder Dispergiermittel verbleiben.

Als Wachse kommen an sich alle üblichen Wachse in Betracht, wobei jedoch synthetischen Wachsen der Vorzug gegeben wird. Insbesondere kommen modifizierte oder unmodifizierte Polyethylenwachse, Polypropylenwachse und Polyamidwachse in Betracht. Die erfindungsgemäß verwendbaren Wachse haben gewöhnlich ein mittleres Molekulargewicht (Zahlenmittel) zwischen 300 und 10 000, vorzugsweise zwischen 500 und 5000.

Polyethylenwachse und Polypropylenwachse sind entweder Polythylen- oder Polypropylenhomopolymere oder Polyethylen- oder Polypropylencopolymere mit 0,5 bis 40 Gew.-% Comonomereinheiten, die sich von gesättigten oder ungesättigten Monocarbonsäuren oder deren Amiden herleiten. Beispiele solcher Comonomereinheiten sind die Reste von Acrylsäure, Methacrylsäure, Maleinsäure, Fumarsäure, Acrylamid, Stearinsäure oder Stearinsäureamid. Ein spezielles Beispiel eines erfindungsgemäß verwendbaren Wachses ist ein Polyethylenbisstearoylamidwachs.

Als Lackharze kommen alle in üblichen Lacken normalerweise verwendeten Harze in Betracht. Zu nennen sind beispielsweise Polyesterharze, Polyurethanharze, Acrylatharze, Alkydharze, Polyamidimidharze, Polyamidharze, Polysulfonharze oder Epoxyharze.

Bevorzugt sind Polyesterharze und Polyurethanharze, die für beide Lackschichten nach der Erfindung eingesetzt werden können.

Die Polyesterharze sind im allgemeinen aus einem oder mehreren aliphatischen und/oder cycloaliphatischen mehrwertigen und gegebenenfalls teilweise einwertigen Alkoholen und einem oder mehreren aliphatischen, cycloaliphatischen und/oder aromatischen mehrwertigen und gegebenenfalls teilweise einwertigen Carbonsäuren und/oder Derivaten der Alkohole oder Carbonsäuren, wie Estern oder Säureanhydriden, aufgebaut. Beispiele geeigneter Alkohole oder Derivate derselben sind Laurylalkohol, Benzylalkohol, Cyclohexanol, Ethylenglykol, 1,2-Propandiol, Propylenoxid, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-ethyl-1,6-hexandiol, 2,2,4-Trimethyl-1,6-hexandiol, 2,4,4-Trimethyl-1,6-hexandiol, 1,4-Dimethylolcyclohexan, 2,2-Bis-(4-hydroxycyclohexyl)-propan, 2,2-Bis-(p-phenylenoxyethanol)-propan, 2,2-Bis-(p-phenylenoxypropanol-2-)-propan, Glycerin, Glycidol, Trimethylolethan, 1,1,1-Trimethylolpropan, Dimethylolpropionsäure, Pentaerythrit und andere. In Betracht kommen auch Veresterungsprodukte von Diolen und Polyolen, wie beispielsweise Di- und Tri hylenglykol, Polyethylenglykol, Di-, Tri-, Tetra- und Pentaerythrit sowie die Neopentylglykolester von Hydroxypivalinsäure. Besonders besteht dieser Bestandteil aus Diolen oder Triolen mit 2 bis 8 Kohlenstoffatomen.

Beispiele geeigneter Carbonsäuren joder Derivate derselben sind Benzoesäure, verzweigte oder unverzweigte Fettsäuren, cycloaliphatische oder aliphatische Dicarbonsäuren, wie Maleinsäure, Fumarsäure, Itaconsäure, Citraconsäure, Malonsäure, Bernsteinsäure, Glutarsäure, Adipinsäure, Acelainsäure usw. oder aromatische Carbonsäuren wie o-Phthalsäure, Dichlorphthalsäure, Isophthalsäure, Terephthalsäure, Dimethylterephthalat, Trimellithsäure und Pyromellithsäure. Bevorzugt sind aliphatische, cycloaliphatische oder aromatische Di- oder Tricarbonsäuren mit 4 bis 10 Kohlenstoffatomen.

Die Vernetzung der Polyesterharze erfolgt in üblicher Weise, wie beispielsweise mit hydroxylgruppenhaltigen Polymeren. Beispiele geeigneter Vernetzungsmittel enthalten N-Methylolgruppen und/oder N-Methylolethergruppen, wie Melaminharze, Harnstoffharze, N,N'-ethylenharnstoffharze, Dicyan amid und Benzoguanamin.

Ein erfindungsgemäß günstig verwendetes Polyesterharz ist ein gesättigtes, ölfreies, hydroxylgruppenhaltiges Polyesterharz.

Eine andere zweckmäßig verwendete Harzgruppe ist die der Polyurethanharze. Diese sind aus Di- oder Polyisocyanaten und hydroxylfunktionellen Bindemitteln aufgebaut, wobei die Harze auch in situ aus einem geblockten Di- oder Polyisocyanat und dem hydroxylfunktionellen Bindemittel gebildet werden können.

Beispiele geeigneter Isocyanate sind Hexamethylendiisocyanat, 2,2,4-Trimethyl-1,6-hexandiisocyanat, 2,4,4-Trimethyl-1,6-hexandiisocyanat, Cyclohexyl-1,4-diisocyanat, Isophorondiisocyanat, das Addukt von einem Molekül 1,4-Butandiol und zwei Molekülen Isophorondiisocyanat oder Hexamethylendiisocyanat, Dicyclohexylmethan-4,4'-diisocyanat, 1,3,5-Trimethyl-(2,4-ω-diisocyanatmethyl)-benzol, Toluoldiisocyanat mit Diphenylmethan-4,4'-diisocyanat usw. Hydroxylfunktionelle Bindemittel zur Reaktion mit den Isocyanatgruppen des gegebenenfalls geblockten Di- oder Polyisocyanats sind beispielsweise Polyester, Polyole, Polyether, Polyurethane, Polyacrylate, Polyglykole, Polyvinylverbindungen, Melaminharze, Epoxyharze, Harnstoffharze oder andere Polymere mit Hydroxylgruppen, wie auch Verbindungen mit aktiven Wasserstoffatomen, die sowohl an Heteroatome als auch an Kohlenstoff gebunden sin können, wie z. B. Polyaminoamide, Amine usw. Bevorzugt ist als hydroxylfunktionelles Bindemittel ein hydroxylgruppenhaltiger Polyester bzw. ein Oxyester.

Bei Verwendung geblockter Polyisocyanate kann die Blockung der Isocyanatgruppen beispielsweise mit einem Alkohol, mit Caprolactam, mit einem Phenol oder mit einem Glykol erfolgen. Besonders geeignete geblockte Polyisocyanate sind caprolactamblockierte Addukte des Isophorondiisocyanates.

Das Lackharz ist in den Lacken gewöhnlich in einer Menge von 10 bis 60, vorzugsweise 20 bis 40 Gew.-% enthalten.

Außer dem Harz und dem Wachs enthält der Lack selbstverständlich ein organisches Lösungs- oder Dispergiermittel, wie ein solches aus der Gruppe der aromatischen oder aliphatischen Kohlenwasserstoffe, Ester, Ether, Ketone, Alkohole, etheralkohole oder anderen flüssigen organischen Verbindungen, in denen sich das Lackharz bzw. deren im Lacksystem verwendeten Vorläufer löst.

Beispiele geeigneter Lösungsmittel sind die Ethylether oder Butylether von Ethylenglykolacetat, Isophoron, 2,2,4-Trimethyl-1,3-pentandiolisobutyrat, 2,2,4-Trimethyl-1,3-pentandioldiisobutyrat, Cyclohexanon, Dimethylglutarat, Dimethylsebacat, Dimethyladipat, der Butylether von Diglykol, N,N-Dimethylformamid, N-Methylpyrrolidon, Propylencarbonatdiisopropylbenzol. Allgemein besonders geeignet sind Aromaten, Ester und Glykole.

Außer Lösungsmittel, Harz und Wachs enthalten die Lacke gewöhnlich übliche Lackzusatzstoffe, wie Pigmente, Metallbronzen, Farbstoffe, Füllstoffe, Antischäummittel, UV-Stabilisatoren, Verlaufmittel, Weichmacher, glanzverbessernde Mittel und Härtungspromotoren.

Übliche Farbpigmente sind beispielsweise Titandioxid (Rutil), Chromoxid, Nickeloxid, Kobaltoxid und Eisenoxid, metallisierende Pigmente, wie Aluminiumbronze, sowie hitzefeste und licht- und wetterbeständige Pigmentfarbstoffe. Selbstverständlich können die Lacke nach der Erfindung aber auch unpigmentiert in Form von sogenannten Klarlacken sein.

Die in den erfindungsgemäßen Lacken verwendeten Harze können vernetzbare oder thermoplastische schmelzbare Harze sein.

Die organische Störsubstanz muß zu irgendeinem Zeitpunkt bei der Verarbeitungstemperatur in flüssigem Zustand vorliegen. Da die Verarbeitungstemperaturen beim Lackauftrag maximal 350 °C betragen bzw. die lackbeschichteten Substratmaterialien vorzugsweise auf eine Temperatur von 210 bis 260 °C erhitzt werden, muß die organische Störsubstanz maximal bei diesen angewendeten Temperaturen in den flüssigen Zustand überführbar sein, da die erwünschte Oberflächenstruktur nicht erhalten wird, wenn die organische Störsubstanz nicht aufschmilzt, sondern in der fertigen Lackschicht als eingebettete Körnchen erhalten bleibt.

Zweckmäßig ist es, wenn im Falle der Verwendung vernetzbarer Harze die Vernetzungstemperatur und im Falle thermoplastischer schmelzbarer Harze die Schmelztemperatur merklich über der Schmelztemperatur der verwendeten organischen Störsubstanz, wie des verwendeten Wachses liegt. Es ist nämlich günstig, daß beim erfindungsgemäßen Verfahren zunächst die Störsubstanz, wie das Wachs, schmilzt, bevor das im Gemisch mit den Teilchen dieser Substanz vorliegende Harz vernetzt oder einbrennt bzw. bevor das thermoplastische Harz aufschmilzt.

Eine besonders günstige Verfahrensweise besteht somit darin, daß man das Substratmaterial nach dem Naßauftrag der die organische Störsubstanz enthaltenden Lackschicht nach und nach erwärmt, daß zunächst das Lösungsmittel oder Dispergiermittel zumindest überwiegend verdampft wird, und zwar zweckmäßig bevor die Störsubstanz schmilzt, daß danach die Störsubstanz aufschmilzt, bevor das Harz vernetzt oder seinerseits aufschmilzt, und daß schließlich bei der Einbrenntemperatur die Vernetzung des Harzes erfolgt bzw. bei der Schmelztemperatur des Harzes dieses aufschmilzt.

Wenn im Zusammenhang mit der Erfindung davon die Rede ist, daß das Harz bei der Verarbeitungstemperatur flüssig sein soll, so ist damit wiederum gemeint, daß dieser flüssige Zustand zu irgendeinem Zeitpunkt der nach und nach angehobenen Temperatur eintreten soll, im allgemeinen im oberen Bereich der angewendeten Verarbeitungstemperatur. Flüssiger Zustand bedeutet dabei entweder der geschmolzene Zustand oder der in Restlösungsmittel gelöste Zustand des Harzes, da beide Möglichkeiten des flüssigen Zustandes einen guten Verlauf des Harzes ermöglichen.

Bevorzugt verwendet man vernetzende Lackharze, wie solche vom Polyester- oder Polyurethantyp. Dies gilt sowohl für die Grundlackschicht als auch für die Decklackschicht. Vor der Aufbringung der Decklackschicht muß die Grundlackschicht vernetzt werden. Zweckmäßig ist es allerdings, die Grundlackschicht vor der Aufbringung der Decklackschicht nur unvollständig zu vernetzen, um eine bessere Verbindung zwischen den beiden Lackschichten zu bekommen.

Beispiel 1

Elektrolytisch verzinkte Stahlbleche von 0,5 mm Dicke, vorbehandelt mit Bonder 1303 (alkalische Oxidation, Fa. Metallgesellschaft) wurden mit einer pigmentierten Grundierung auf der Basis eines linearen, gesättigten, ölfreien, hydroxylgruppenhaltigen Polyesterharzes, einem Melaminharz und einem Wachsanteil im Rakel-Aufziehverfahren (Spiralrakel) lackiert und anschließend 30 sec in einem Durchlaufofen bei einer Ofentemperatur von 260 bis 280 °C und einer daraus resultierenden Trägermaterialtemperatur (PMT) von 220 bis 230 °C eingebrannt. Die Trockenfilmdicke lag zwischen 10 bis 20 μm, d.h. die "Täler" der ausgebildeten Struktur (ca. 50 % der Oberfläche) hatten ca. 5 bis 10 μm, die "Berge" ca. 20 bis 25 μm. Danach erfolgte die Überlackierung nach dem gleichen Verfahren (d. h. mit Spiralrakel) mit einem weiß pigmentierten Decklack auf der Basis von Polyurethanharz. Anschließend wurde der Decklack 40 sec im Durchlaufofen bei einer Ofentemperatur von 260 bis 280 °C und einer daraus resultierenden Trägermaterialtemperatur (PMT) von 240 bis 250 °C eingebrannt. Die Trockenfilmdicke lag zwischen 20 bis 25 μm.

Grundierung, strukturiert, weiß

|  | Gewichtsteile |
|---|---|
| lineares, gesättigtes, ölfreies, hydroxylgruppenhaltiges Polyesterharz (110%ig) | 25,0 |
| Melaminharz (100%ig) | 5,0 |
| Titandioxid (Rutil) | 16,0 |
| Zinkphosphat | 4,0 |
| geblockte p-Toluolsulfonsäure | 0,2 |
| aromatisches Kohlenwasserstofflösungsmittel (Siedebereich 185 bis 210°C) | 19,0 |
| aromatisches Kohlenwasserstofflösungsmittel (Siedebereich 230 bis 290°C) | 18,0 |
| Diethylenglykolmonobutyletheracetat | 10,3 |
| Ethylenglykolmonoethyletheracetat | 2,0 |
| Polyethylenbisstearylamidwachs | 0,5 |
|  | 100,0 |

Auslaufviskosität = 100 sec 4 mm DIN 53 211 20°C

Decklack, glatt, weiß

|  | Gewichtsteile |
|---|---|
| Caprolactam geblocktes Addukt von Isophorondiiso-cyanat (IPDI) und hydroxylgruppenhaltiger Oxyester (Gewichtsverhältnis 23,4:36,6) | 34,0 |
| Titandioxid (Rutil) | 28,0 |
| Dibutylzinndilaurat (DBTL) | 0,2 |
| aromatisches Kohlenwasserstofflösungsmittel (Siedebereich 185 bis 210°C) | 14,0 |
| aromatisches Kohlenwasserstofflösungsmittel (Siedebereich 230 bis 290°C) | 11,0 |
| Ethylenglykolmonoethyletheracetat | 10,0 |
| Diethylenglikolmonobutyletheracetat | 2,8 |
|  | 100,0 |

Auslaufviskosität = 100 sec 4 mm DIN 53 211 20°C

Die Herstellung der angeführten Lacke erfolgte nach dem üblichen Verfahren der Lackfertigung, d. h. Dispergieren mit einem Dissolver, Mahlung mit einer Perl-Mill, Einstellung der Viskosität mit Lösungsmitteln. Bei der Herstellung der Grundierung erfolgt die Einarbeitung des Wachses mit einem Dissolver. Solchermaßen beschichtete Testbleche wurden nach Coil Coating-Kriterien getestet:

**Tabelle I**

| | |
|---|---|
| Glanzgrad: | 80 Einheiten Winkel 60° nach Gardner |
| Gitterschnitt nach DIN 53 151: | Kennwert GT 0 |
| Abriebfestigkeit: Taber-Abraser GS 17-Rollen 1000 g Belastung 500 U | <15 mg |
| Bleistifthärte Ritzhärte nach Wolf-Wilborn nach ECCA-Norm: T4: | H |
| Erichsentiefung nach DIN 53 156: | <9 mm |
| Schlagprüfung (Impact-Test) ASTM D 2794-69 | 80 inchpound = 0,03 Nm |
| T-bend-Test nach ECCA-Norm T7: T1–T1,5 abrißfrei/rißfrei | |
| MEK-Test (Methyläthylketon): 100 Doppelhübe mit getränktem Wattebausch | |

**Tabelle II**

| | |
|---|---|
| Weather-O-Meter (Atlas) Zyklus: | 17:3 |
| Kohlebogenlicht: | 1000 h i.O. |
| QUV-Test: | 500 h 15% Glanzabfall leichte Vergilbung, keine Kreidung |
| Feuchtraumklima nach DIN 50 017 SK: | 1000 h i.O. |
| Kesternich nach DIN 50 018: | 10 Runden leichte Fleckenbildung |
| Salzsprühtest nach DIN 50 021 oder ASTM B 117: | 500 h i.O. |
| Wassereinlagerung bei 30°C | 1000 h i.O. |

**Beständigkeitsprüfungen für Waschgeräte:**

| | |
|---|---|
| 1. Waschlaugentest: | 1%ige Lauge z.B. Persillösung 2 × 5 h bei 95°C |
| 2. Kochtest: | Wasser 4 × 5 h bei 95°C |
| Erholzeit der Testbleche nach jeder Runde 24 h bei Raumtemperatur. | |
| Nach jeder Runde: | Gitterschnitt, Erichsentiefung, T-bend-Test und Eindringhärte nach Buchholz. |
| 3. Detergenitnetest: | z.B. 0,5%ige Perovitlösung in Wasser 96 h bei 60°C |

Die Anforderungen an Waschgeräte an sind somit erfüllt.

<u>Beispiel 2</u>

Aluminiumbleche (Kurzzeichen nach DIN: ALMn 1 Mg 0,5, Fa. Olbright & Wilson, 0,6 mm Dicke, vorbehandelt mit ACCOMET C (Chromatierung), wurden mit einer pigmentierten Grundierung auf der Basis eines linearen, gesättigten, ölfreien, hydroxylgruppenhaltigen Polyesterharzes in Kombination mit Melaminharz im Rakelaufziehverfahren (Spiralrakel) lackiert und anschließend 30 sec in einem Durchlaufofen bei einer Ofentemperatur von 260 bis 280 °C und einer Trägermaterialtemperatur (PMT) von 230 bis 240 °C eingebrannt. Die Trokkenfilmdicke lag bei 8 bis 10 µm. Die erzielte Lackoberfläche war glatt (ohne Struktur). Nach dem gleichen Verfahren (d. h. mit Spiralrakel) wurde auf die eingebrannte Grundierung ein farbloser (unpigmentierter) Decklack auf der Basis von Polyurethanharz aufgetragen und in 40 sec im Durchlaufofen bei einer Ofentemperatur von 260 bis 280 °C und einer daraus resultierenden Trägermaterialtemperatur (PMT) von 240 bis 250 °C eingebrannt. Der verwendete farblose Decklack enthält einen Wachsanteil, der die Ausbildung einer gleichmäßigen Oberflächenstruktur bewirkt. Die Trockenfilmdicke lag zwischen 10 und 20 µm, d. h. die "Täler" der ausgebildeten Struktur (ca. 50 % der Oberfläche) hatten 5 bis 10 µm, die "Berge" ca. 20 bis 25 µm.

Grundierung, glatt, schwarz

| | Gewichtsteile |
|---|---|
| lineares, gesättigtes, ölfreies, hydroxylgruppenhaltiges Polyesterharz (110%ig) | 30,0 |
| Melaminharz (100%ig) | 10,0 |
| Epoxyharz | 2,0 |
| Ruß | 2,0 |
| Mattierungsmittel | 2,0 |
| geblockte Paratoluolsulfonsäure | 0,1 |
| aromatisches Kohlenwasserstofflösungsmittel (Siedebereich 185 bis 210°C) | 23,0 |
| aromatisches Kohlenwasserstofflösungsmittel (Siedebereich 230 bis 290°C) | 9,9 |
| Ethylenglykolmonoethylätheracetat | 10,0 |
| Diethylenglykolmonobutyletheracetat | 11,0 |
| | 100,0 |

Auslaufviskosität = 100 sec 4 mm DIN 53 211 20°C

Die Herstellung der angeführten Lacke erfolgte nach dem üblichen Verfahren der Lackfertigung, d. h. dispergieren mit einem Dissolver, Mahlung mit einer Perl-Mill, Einstellung der Viskosität mit Lösungsmitteln. Bei der Herstellung des farblosen Decklackes erfolgt die Einarbeitung des Wachses mit einem Dissolver.

Solchermaßen beschichtete Testbleche wurden nach Coil-Coating-Bedingungen mechanisch und physikalisch getestet:

Decklack, farblos, strukturiert

| | Gewichtsteile |
|---|---|
| Caprolactam geblocktes Addukt von Isophorondiisocyanat (IPDI) und hydroxylgruppenhaltiger Oxyester (Gewichtsverhältnis 23,4:36,6) | 50,0 |
| Dibutylzinndilaurat (DBTL) | 0,2 |
| aromatisches Kohlenwasserstofflösungsmittel (Siedebereich 185 bis 210°C) | 25,0 |
| aromatisches Kohlenwasserstofflösungsmittel (Siedebereich 230 bis 290°C) | 12,8 |
| Ethylenglykolmonoethyletheracetat | 11,0 |
| Polyethylenbisstearylamidwachs | 1,0 |
| | 100,0 |

Auslaufviskosität = 100 sec 4 mm DIN 53 211 20°C

Tabelle III

| | |
|---|---|
| Glanzgrad: | 80 Einheiten Winkel 60° nach Gardner |
| Gitterschnitt nach DIN 53 151: | Kennwert GT 0 |
| Abriebfestigkeit: Taber-Abraser CS 17-Rollen 1000 g Belastung 500 U: | <9,5 mg |
| Bleistifthärte-Ritzhärte nach Wolf-Wilborn nach ECCA-Norm: T4: | H |
| Erichsentiefe nach DIN 53 156: | <9 mm |
| Schlagprüfung (Impact-Test): ASTM D 2794-69 | 80 inchpound = 0,03 Nm |
| T-bend-Test nach ECCA-Norm T7: | T0–T0,5 abrißfrei/rißfrei |
| MEK-Test (Methylethylketon): | 100 Doppelhübe mit getränktem Wattebausch |

## Beispiel 3

Aluminiumbleche (Kurzzeichen nach DIN ALMn 1 Mg 0,5) 0,6 mm Dicke, vorbehandelt mit ACCOMET C (Chromatierung, Fa. Olbright & Wilson) wurden mit einer pigmentierten Grundierung auf der Basis eines linearen, gesättigten, ölfreien, hydroxylgruppenhaltigen Polyesterharzes in Kombination mit Melaminharz im Rakelaufziehverfahren (Spiralrakel) lackiert und anschließend 30 sec in einem Durchlaufofen bei einer Ofentemperatur von 260 bis 280 °C und einer Trägermaterialtemperatur (PMT) von 230 bis 240 °C eingebrannt. Die Trockenfilmdicke lag bei 8 bis 10 μm. Die erzielte Lackoberfläche war glatt (ohne Struktur).

Nach dem gleichen Verfahren (d. h. mit Spiralrakel) wurde auf die eingebrannte Grundierung ein mit Aluminiumbronze versehener Decklack auf der Basis eines linearen, gesättigten, ölfreien, hydroxylgruppenhaltigen Polyesterharzes in Kombination mit Melaminharz aufgetragen und in 40 sec im Durchlaufofen bei einer Ofentemperatur von 260 bis 280 °C und einer daraus resultierenden Trägermaterialtemperatur (PMT) von 240 - 250 °C eingebrannt. Der verwendete Decklack enthält einen Wachsanteil, der die Ausbildung einer gleichmäßigen Oberflächenstruktur bewirkt. Die Trockenfilmdicke lag zwischen 10 bis 20 μm, d. h. die "Täler" der ausgebildeten Struktur (ca. 50 % der Oberfläche) hatten 5 bis 10 μm, die "Berge" ca. 20 bis 25 μm.

Tabelle IV

| | |
|---|---|
| Weather-O-Meter (Atlas) Zyklus: | 17:3 |
| Kohlebogenlicht: | 1000 h i.O. |
| QUV-Test: | 500 h 15% Glanzabfall leichte Vergilbung, keine Kreidung |
| Feuchtraumklima nach DIN 50 017 SK: | 1000 h i.O. |
| Kesternich nach DIN 50 018: | 10 Runden leichte Fleckenbildung |
| Salzsprühtest nach DIN 50 021 oder ASTM B 117: | 1000 h i.O. |
| Wassereinlagerung bei 30°C | 1000 h i.O. |

Grundierung, glatt, schwarz

|  | Gewichtsteile |
|---|---|
| lineares, gesättigtes, ölfreies, hydroxylgruppenhaltiges Polyesterharz (100%ig) | 30,0 |
| Melaminharz | 10,0 |
| Epoxyharz | 2,0 |
| Ruß | 2,0 |
| Mattierungsmittel | 2,0 |
| geblockte p-Toluolsulfonsäure | 0,1 |
| aromatisches Kohlenwasserstofflösungsmittel (Siedebereich 185 bis 210°C) | 23,0 |
| aromatisches Kohlenwasserstofflösungsmittel (Siedebereich 230 bis 290°C) | 9,9 |
| Ethylenglykolmonoethyletheracetat | 10,0 |
| Diethylenglykolmonobutyletheracetat | 11,0 |
|  | 100,0 |

Auslaufviskosität = 100 sec 4 mm DIN 53 211 20°C

Decklack, strukturiert, aluminiumfarbig

|  | Gewichtsteile |
|---|---|
| lineares, gesättigtes, ölfreies hydroxyl-å gruppenhaltiges Polyesterharz 100%ig | 30,0 |
| Melaminharz | 12,0 |
| geblockte p-Toluolsulfonsäure | 0,5 |
| aromatisches Kohlenwasserstofflösungsmittel (Siedebereich 185 bis 210°C) | 12,0 |
| aromatisches Kohlenwasserstofflösungsmittel (Siedebereich 230 bis 290°C) | 42,0 |
| Diethylenglykolmonobutyletheracetat | 3,0 |
| Aluminiumbronze | 1,0 |
| Polyethylenbissstearylamidwachs | 1,5 |
|  | 100,0 |

Auslaufviskosität = 100 sec 4 mm DIN 53 211 20°C

Die Herstellung der angeführten Lacke erfolgte nach dem üblichen Verfahren der Lackfertigung, d. h. Dispergieren mit einem Dissolver, Mahlung mit einer Perl-Mill, Einstellung der Viskosität mit Lösungsmitteln. Bei der Herstellung des bronzierten Decklackes erfolgt die Einarbeitung des Wachses mit einem Dissolver.

Solchermaßen beschichtete Testbleche wurden nach Coil-Coating-Bedingungen mechanisch und physikalisch getestet:

Tabelle V

| | |
|---|---|
| Glanzgrad: | 80 Einheiten Winkel 60° nach Gardner |
| Gitterschnitt nach DIN 53 151: | Kennwert 0 |
| Abriebfestigkeit: Taber-Abraser CS 17-Rollen 1000 g Belastung 500 U: | <9,5 mg |
| Bleistifthärte-Ritzhärte nach Wolf-Wilborn nach ECCA-Norm: T4: | H |
| Erichsentiefe nach DIN 53 156: | <9 mm |
| Schlagprüfung (Impact-Test) ASTM D 2794-69 | 80 inchpound = 0,03 Nm |
| T-bend-Test nach ECCA-Norm T7: | T0–T0,5 abrißfrei/rißfrei |
| MEK-Test (Methylethylketon): | 100 Doppelhübe mit getränktem Wattebausch |

Tabelle VI

| | |
|---|---|
| Weather-O-Meter (Atlas) Zyklus 6: | 17:3 |
| Kohlebogenlicht: | 1000 h i.O. |
| QUV-Test: | 500 h 15% Glanzabfall leichte Vergilbung, keine Kreidung |
| Feuchtraumklima nach DIN 50 017 SK: | 1000 h i.O. |
| Kesternich nach DIN 50 018: | 10 Runden leichte Fleckenbildung |
| Salzsprühtest nach DIN 50 021 oder ASTM B 117: | 1000 h i.O. |
| Wassereinlagerung bei 30°C | 1000 h i.O. |

**Patentansprüche**

1. Verfahren zum Lackieren bahnförmiger oder tafelförmiger Substratmaterialien durch Walzenauftrag unter Aufbringung einer Grundlackschicht und einer Decklackschicht, **dadurch gekennzeichnet,** daß man zur Aufbringung einer der beiden Lackschichten einen Lack verwendet, der in einem Lösungs- oder Dispergiermittel ein vernetzbares oder thermoplastisches, bei der Verarbeitungstemperatur flüssiges Harz, 0,5 bis 7 Gew.-%, bezogen auf das Trockengewicht des Harzes, einer in dem Lösungs- oder Dispergiermittel suspendierten oder emulgierten organischen Substanz, deren Teilchen- oder Tröpfchengrößen zwischen 3 und 60 μm liegen, die bei der Verarbeitungstemperatur schmilzt und deren Oberflächenspannung sich von derjenigen des Harzes unterscheidet, und gegebenenfalls übliche Lackzusatzstoffe enthält.

2. Verfahren nach Anspruch 1, **dadurch gekennzeichnet,** daß man als suspendierte oder emulgierte organische Substanz ein Wachs verwendet.

3. Verfahren nach einem der Ansprüche 1 und 2, **dadurch gekennzeichnet,** daß man als suspendierte oder emulgierte organische Substanz eine solche verwendet, die unterhalb der Vernetzungs- bzw. Schmelztemperatur des Harzes flüssig ist oder wird.

4. Verfahren nach einem der Ansprüche 1 bis 3, **dadurch gekennzeichnet,** daß man als suspendierte oder emulgierte organische Substanz einen Feststoff verwendet.

5. Verfahren nach einem der Ansprüche 1 bis 4, **dadurch gekennzeichnet,** daß man das Substratmaterial nach dem Naßauftrag der die suspendierte oder emulgierte organische Substanz enthaltenden Lackschicht derart erwärmt, daß in zeitlicher Folge nacheinander zunächst das Lösungs- oder Dispergiermittel zumindest überwiegend verdampft wird, sodann die suspendierte oder emulgierte organische Substanz schmilzt und danach das Harz vernetzt oder aufschmilzt.

6. Verfahren nach einem der Ansprüche 1 bis 5, **dadurch gekennzeichnet,** daß man bei Aufbringung der die suspendierte oder emulgierte organische Substanz enthaltenden Lackschicht als Decklackschicht vor deren Aufbringung die Grundlackschicht vernetzt.

7. Verfahren nach Anspruch 6, **dadurch gekennzeichnet,** daß man die Grundlackschicht unvollständig vernetzt.

8. Verfahren nach einem der Ansprüche 1 bis 5, **dadurch gekennzeichnet,** daß man bei Aufbringung der die suspendierte oder emulgierte organische Substanz enthaltenden Lackschicht als Decklackschicht einen Grundlack verwendet, dessen Schmelztemperatur über der Temperatur liegt, auf die die Decklackschicht erwärmt wird.

9. Verfahren nach einem der Ansprüche 1 bis 8, **dadurch gekennzeichnet,** daß man eine suspendierte organische Substanz mit Teilchengrößen zwischen 5 und 60, vorzugsweise zwischen 10 und 40 µm ver-wendet.

10. Verfahren nach einem der Ansprüche 1 bis 9, **dadurch gekennzeichnet,** daß man jede der beiden Lackschichten mit einer Trockenfilmdicke zwischen 5 und 40, vorzugsweise zwischen 5 und 30 µm, besonders zwischen 10 und 20 µm aufbringt.

11. Verfahren nach einem der Ansprüche 1 bis 6, **dadurch gekennzeichnet,** daß man als suspendierte oder emulgierte organische Substanz eine solche mit einer Schmelztemperatur zwischen 100 und 180, vorzugsweise zwischen 130 und 160 °C verwendet.

12. Verfahren nach einem der Ansprüche 1 bis 11, **dadurch ge-kennzeichnet,** daß man die suspendierte oder emulgierte organische Substanz in einer Menge von 1 bis 5 Gew.-%, besonders von 1,5 bis 4 Gew.-%, bezogen auf das Trokkengewicht des Harzes, verwendet.

13. Verfahren nach einem der Ansprüche 2 bis 12, **dadurch gekennzeichnet,** daß man als Wachs ein synthetisches Wachs, vorzugsweise ein gegebenenfalls modifiziertes Polyethylenwachs, Polypropylenwachs oder Polyamidwachs verwendet.

14. Verfahren nach einem der Ansprüche 1 bis 13, **dadurch gekennzeichnet,** daß man als Harz ein Polyester-, Polyurethan-, Acrylat-, Alkyd-, Epoxy-, Polyamidimid-, Polyamid- oder Polysulfonharz verwendet.

15. Verfahren nach Anspruch 14, **dadurch gekennzeichnet,** daß man als Harz der die suspendierte oder emulgierte organische Substanz enthaltenden Lackschicht ein gesättigtes, ölfreies, hydroxylgruppenhaltiges Polyesterharz verwendet.

16. Verfahren nach einem der Ansprüche 1 bis 15, **dadurch gekennzeichnet,** daß man das mit dem die suspendierte oder emulgierte organische Substanz enthaltenden Lack beschichtete Substratmaterial bis auf eine Temperatur von maximal 350, vorzugsweise von 210 bis 260 °C erwärmt.

17. Verfahren nach einem der Ansprüche 1 bis 16, **dadurch gekennzeichnet,** daß man in dem Lack ein Harz und eine in dem Lösungs- oder Dispergiermittel suspendierte oder emulgierte organische Substanz verwendet, deren Kontaktwinkel als Maß der Oberflächenspannung bei Benetzung mit destilliertem Wasser sich um mindestens 20°, vorzugsweise um mindestens 30°, besonders um mindestens 40° unterscheidet.

**Claims**

1. A method of lacquering substrate materials in web or sheet form by coil coating by applying a base coat of lacquer and a top coat of lacquer, characterised in that to apply one of the two coats of lacquer, use is made of a lacquer which, in a solvent or dispersing agent, contains a cross-linkable or thermoplastic resin which is liquid at the treatment temperature, from 0.5 to 7% by weight with respect to the dry weight of the resin of an organic substance which is emulsified or suspended in the solvent or dispersing agent and the sizes of the particles or droplets or which are between 3 and 60 µm and which melts at the treatment temperature and the surface tension of which differs from that of the resin, and possibly conventional lacquer additives.

2. A method according to claim 1 characterised in that a wax is used as the suspended or emulsified organic substance.

3. A method according to one of claims 1 and 2 characterised in that the suspended or emulsified organic substance used is a substance which is or becomes liquid below the cross-linking or melting temperature of the resin.

4. A method according to one of claims 1 to 3 characterised in that the suspended or emulsified organic substance used is a solid.

5. A method according to one of claims 1 to 4 characterised in that after wet application of the coat of lacquer containing the suspended or emulsified organic substance the substrate material is heated in such a way that in succession firstly the solution or dispersing agent is at least predominantly evaporated, then the suspended or emulsified organic substance melts and thereafter the resin undergoes cross-linking or fuses.

6. A method according to one of claims 1 to 5 characterised in that, when applying the coat of lacquer containing the suspended or emulsified organic substance as the top coat of lacquer, prior to the application thereof, the base coat of lacquer is cross-linked.

7. A method according to claim 6 characterised in that the base coat of lacquer is incompletely cross-linked.

8. A method according to one of claims 1 to 5 characterised in that, when applying the coat of lacquer containing the suspended or emulsified organic substance as the top coat of lacquer, a base lacquer is used, the melting temperature of which is above the temperature to which the top coat of lacquer is heated.

9. A method according to one of claims 1 to 8 characterised by using a suspended organic substance with particle sizes of between 5 and 60 and preferably between 10 and 40 μm.

10. A method according to one of claims 1 to 9 characterised in that each of the two coats of lacquer is applied with a dry film thickness of between 5 and 40, preferably between 5 and 30 μm, in particular between 10 and 20 μm.

11. A method according to one of claims 1 to 6 characterised in that the suspended or emulsified organic substance used is a substance with a melting temperature of between 100 and 180, preferably between 130 and 160°C.

12. A method according to one of claims 1 to 11 characterised by using the suspended or emulsified organic substance in an amount of from 1 to 5% by weight, in particular from 1.5 to 4% by weight, with respect to the dry weight of the resin.

13. A method according to one of claims 2 to 12 characterised in that the wax used is a synthetic wax, preferably an optionally modified polyethylene wax, polypropylene wax or polyamide wax.

14. A method according to one of claims 1 to 13 characterised in that the resin used is a polyester, polyurethane, acrylate, alkyd, epoxy, polyamidimide, polyamide or polysulphone resin.

15. A method according to claim 14 characterised in that the resin of the coat of lacquer containing the suspended or emulsified organic substance is a saturated, oil-free, hydroxyl group-bearing polyester resin.

16. A method according to one of claims 1 to 15 characterised in that the substrate material coated with the lacquer containing the suspended or emulsified organic substance is heated to a temperature of a maximum of 350 and preferably from 210 to 260°C.

17. A method according to one of claims 1 to 16 characterised by using in the lacquer a resin and an organic substance which is suspended or emulsified in the solvent or dispersing agent, the contact angle of which, as a measurement in respect of the surface tension when wetted with distilled water, differs by at least 20°, preferably at least 30°, in particular at least 40°.

**Revendications**

1. Procédé pour vernir des matériaux constituant des substrats en forme de feuilles continues ou de plaques ou de forme tabulaire, par revêtement à l'aide de rouleaux avec application d'une couche de vernis de base et d'une couche de vernis de couverture, procédé caractérisé en ce que, pour appliquer l'une des deux couches de vernis, on utilise un vernis qui contient dans un solvant ou un milieu de dispersion une résine réticulable ou thermoplastique, liquide à la température de mise en œuvre, 0,5 à 7% en poids, sur la base du poids sec de la résine, d'une substance organique en suspension ou émulsionnée dans le solvant ou dans le milieu de dispersion et dont les grosseurs de particules ou de gouttes se situent entre 3 et 60 μm, qui fond à la température de mise en œuvre et dont la tension superficielle diffère de celle de la résine, et qui contient éventuellement des additifs usuels pour vernis.

2. Procédé selon la revendication 1, caractérisé en ce qu'on utilise une cire comme substance organique en suspension ou émulsionnée.

3. Procédé selon l'une des revendications 1 et 2, caractérisé en ce qu'on utilise, comme substance organique en suspension ou émulsionnée, une substance qui est ou devient liquide à une température inférieure à la température de réticulation ou de fusion de la résine.

4. Procédé selon l'une des revendications 1 à 3, caractérisé en ce qu'on utilise un solide comme substance organique en suspension ou émulsionnée.

5. Procédé selon l'une des revendications 1 à 4, caractérisé en ce que, après l'application au mouillé de la couche de vernis contenant la substance organique en suspension ou émulsionnée, on chauffe la matière constituant le substrat de façon qu'au cours du temps il se produise successivement tout d'abord l'évaporation, au moins dans sa majeure partie, du solvant ou du milieu de dispersion puis que la substance organique, en suspension ou émulsionnée, fonde et qu'ensuite la résine se réticule ou fonde.

6. Procédé selon l'une des revendications 1 à 5, caractérisé en ce que, en cas d'application, comme couche de vernis de couverture, de la couche de vernis contenant la substance organique en suspension ou émulsionnée, on provoque, avant cette application, la réticulation de la couche de vernis de base.

7. Procédé selon la revendication 6, caractérisé en ce qu'on provoque une réticulation incomplète de la couche de vernis de base.

8. Procédé selon l'une des revendications 1 à 5, caractérisé en ce qu'en cas d'application de la couche de vernis, contenant la substance organique en suspension ou émulsionnée, à titre de couche de vernis de couverture, on utilise un vernis de base dont la température de fusion se situe au-dessus de la température à laquelle on chauffe la couche de vernis de couverture.

9. Procédé selon l'une des revendications 1 à 8, caractérisé en ce qu'on utilise une substance organique en suspension, dont les particules ont des grosseurs comprises entre 5 et 60, avantageusement entre 10 et 40 μm.

10. Procédé selon l'une des revendications 1 à 9, caractérisé en ce qu'on applique chacune des deux couches de vernis avec une épaisseur de pellicule sèche comprise entre 5 et 40, avantageusement entre 5 et 30 μm, de façon particulière entre 10 et 20 μm.

11. Procédé selon l'une des revendications 1 à 6, caractérisé en ce qu'on utilise, comme substance organique en suspension ou émulsionnée, une telle substance ayant une température de fusion comprise entre 100 et 180, avantageusement entre 130 et 160°C.

12. Procédé selon l'une des revendications 1 à 11, caractérisé en ce qu'on utilise la substance organique, en suspension ou émulsionnée, en une quantité de 1 à 5% en poids, en particulier de 1,5 à 4% en poids, sur la base du poids sec de la résine.

13. Procédé selon l'une des revendications 2 à 12, caractérisé en ce qu'on utilise comme cire une cire synthétique, avantageusement une cire de polyéthylène, une cire de polypropylène ou une cire de polyamide éventuellement modifiées.

14. Procédé selon l'une des revendications 1 à 13, caractérisé en ce qu'on utilise comme résine une résine de polyester, polyuréthanne, acrylate, alkyde, époxyde, polyamideimide, polyamide ou polysulfone.

15. Procédé selon la revendication 14, caractérisé en ce qu'on utilise, comme résine de la couche de vernis contenant la substance organique en suspension ou émulsionnée, une résine polyester saturée, dépourvue d'huile, contenant des groupes hydroxyles.

16. Procédé selon l'une des revendications 1 à 15, caractérisé en ce qu'on chauffe, jusqu'à une température d'au moins 350°, avantageusement de 210 à 260°C, la matière formant substrat, revêtue du vernis contenant la substance organique en suspension ou émulsionnée.

17. Procédé selon l'une des revendications 1 à 16, caractérisé en ce qu'on utilise dans le vernis une résine et une substance organique en suspension ou émulsionnée dans le solvant ou dans le milieu de dispersion et dont l'angle de contact, comme mesure de la tension superficielle lors du mouillage par de l'eau distillée, diffère d'au moins 20°, avantageusement d'au moins 30°, en particulier d'au moins 40°.